**Europäisches Patentamt**

(19) **European Patent Office**

**Office européen des brevets**

(11) Publication number : **0 329 210 B1**

(12) # EUROPEAN PATENT SPECIFICATION

(45) Date of publication of patent specification :
23.09.92 Bulletin 92/39

(51) Int. Cl.⁵ : **B65G 47/68**

(21) Application number : **89200153.8**

(22) Date of filing : **25.01.89**

(54) **In-line device for positioning between a supply conveyor and a discharge conveyor.**

(30) Priority : **15.02.88 NL 8800363**

(43) Date of publication of application :
**23.08.89 Bulletin 89/34**

(45) Publication of the grant of the patent :
**23.09.92 Bulletin 92/39**

(84) Designated Contracting States :
**AT BE CH DE ES FR GB GR IT LI LU NL SE**

(56) References cited :
**EP-A- 0 033 773**
**DE-A- 3 245 198**
**FR-A- 2 533 200**

(73) Proprietor : **Speciaal-Machinefabriek J.H. van Uitert B.V.**
**Industriestraat 14-16**
**NL-5107 NC Dongen (NL)**

(72) Inventor : **van Uitert, Johannes Hendrikus**
**Vaartweg 33**
**NL-5109 RB 's-Gravenmoer (NL)**

(74) Representative : **Lips, Hendrik Jan George, Ir. et al**
**HAAGSCH OCTROOIBUREAU Breitnerlaan 146**
**NL-2596 HG Den Haag (NL)**

## Description

The invention relates to an in-line device for the transformation of containers, such as bottles, tins, cans and the like, supplied standing erect beside and behind each other by means of a supply conveyor, into a smaller and in particular single line for removal by means of a discharge conveyor moving at a higher speed than the supply conveyor and in such a way that the speeds of the tracks of the supply and discharge conveyor are about inversely proportional to the widths of the related conveyors, said supply conveyor and discharge conveyor being positioned on either side of a transfer conveyor consisting of a number of transfer tracks which are driven with various speeds such that a stepwise transition is present between the speed of the supply conveyor and of the discharge conveyor, guiding rods being present on the side of the succeeding conveyors for guiding the containers from the supply conveyor to the discharge conveyor and the upper surface of the conveyors, viewed transverse to the direction of movement of the conveyors, may be inclined in respect of the horizontal plane.

Such devices e.g. are described in the European Patent Application 0 033 773 and in the French patent specification 2,533,200.

In said European Patent Application it is stated that the upper surface of the conveyors is making such an angle with the horizontal plane, that the containers supplied by the supply conveyor will tend to slide to the transfer conveyor by which, in particular when bottles are conveyed, the created noise will be diminished whilst lying bottles may roll away passing the guiding rod.

In case of said French patent specification on the other hand the upper surface of the conveyors is just brought into the other position in respect of the horizontal plane, also with the intention to decrease the noise created during operation of the device. In this patent specification the removal of overturned containers is not discussed.

In case of the ever increasing conveying speeds of such devices the danger that containers, in particular bottles, will overturn is increased. In lying position such containers require more space on the conveyors so that the space available for erected containers is becoming smaller so that these relatively, will bump more against each other.

Although in case of the device according to the above mentioned European patent application overturned containers may roll away in consequence of the inclined position of the conveyors, this will only be the case for containers lying free from other containers.

The object of the invention is now to execute a device of the type described above in such a way that overturned containers, if any, may remove themselves easier from the conveyors.

According to the invention this is attained by that when the supply conveyor is making a positive angle with the horizontal plane this angle is decreasing in the direction towards the discharge conveyor and is changing into a negative angle near the discharge conveyor.

In this way it is attained, that overturned containers, which cannot easily roll away because they are enclosed by standing containers, may roll away afterwards to wit to the other side than the first containers.

In practice it has appeared that the angle which the upper surface of the conveyors is making with the horizontal plane, in particular can lie between -5° and +5°. In many cases the angle may still be smaller but this depends on the type of containers, on the material from which the containers are made, etc.

According to a preferred embodiment of the invention it will be provided, that the angle which the upper surface of the conveyors is making with the horizontal plane near the supply conveyor is directed such that when bringing the containers on the transfer conveyor the containers have to be pressed upwardly.

In this case overturned containers, if any, will only roll down from the supply conveyor and will not roll over the tracks of the transfer conveyor. Overturned containers which are lying closer to the transfer conveyor, may roll away afterwards at the side of the discharge conveyor and also then will not have to go a long way over the conveyors. Also by this the created noise will be maintained within certain limits.

The invention is now described by means of an embodiment, shown in the drawing, in which:

Fig. 1 shows a top view of a device according to the present invention; and

Fig. 2, 3 and 4 show cross-sections along the lines II-II; III-III and IV-IV respectively of Fig. 1.

The device shown in the drawing comprises the supply conveyor 1, the transfer conveyor 2 and the discharge conveyor 3.

The supply conveyor 1 and the transfer conveyor 2 each consist of a number of conveyor tracks 4 and 5 respectively, each having a width which substantially corresponds with the width of the containers which have to be conveyed, like the bottles 6. The discharge conveyor 3 comprises only one conveyor track.

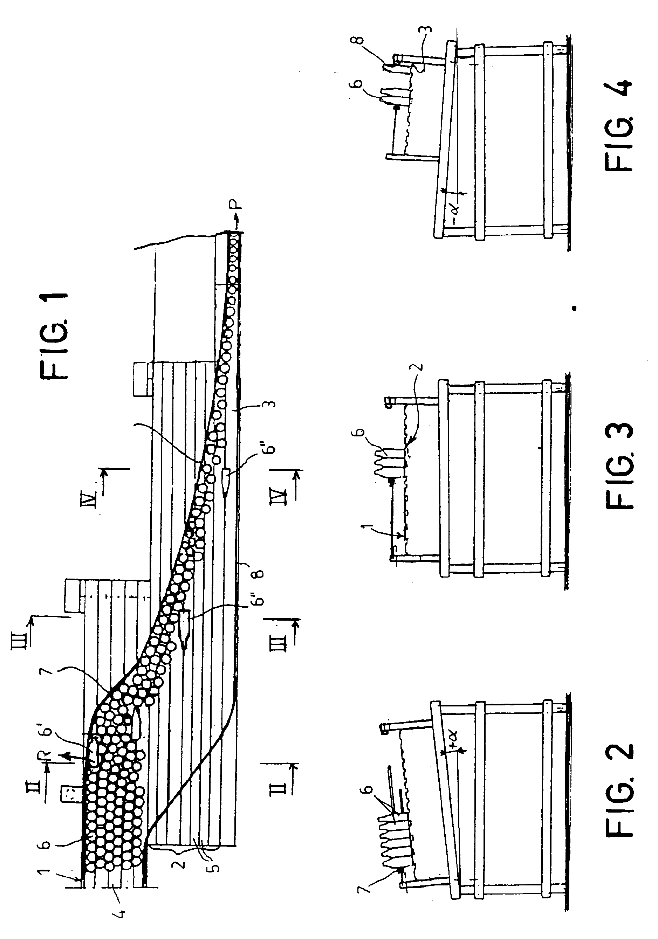

Guiding rods 7 and 8 serve for guiding the bottles 6 and extend themselves at both sides of the bottles standing on the conveyors to guide the bottles in the right way from the supply conveyor 1 towards the discharge conveyor 3 so that they will leave the device in the direction of the arrow P in Fig. 1.

As appears from Fig. 2 the upper surface of the supply conveyor 1 and of the transfer conveyor 2 are making an angle $+\alpha$ with the horizontal plane, such that at the beginning of the transfer conveyor 2 the bottles 6 will have to be pressed somewhat upwardly by the guiding rod 7. An overturned bottle 6′, see Fig. 1, present close to the guiding rod 7 may easily leave the supply conveyor 1 in the direction of the arrow R.

During the further movement of the bottles these are arriving on the upper surface of the transfer conveyor 2 running about horizontal, as this is shown in Fig. 3. During still further movement of the bottles they arrive above a portion of the transfer conveyor and of the discharge conveyor 3 which is inclined in the other direction than indicated in Fig. 2. In Fig. 4 this is indicated by the angle -α.

Over the section of the conveyors lying between the cross-sections shown in the Figs. 3 and 4, overturned bottles 6″ may easily roll down from the conveyors.

In the known way the speeds of the succeeding conveyor tracks 5 of the transfer conveyor 2 will increase stepwise from the speed of the supply conveyor 1 till the speed of the discharge conveyor 3. These speeds can be adjustable for adjusting the capacity of the device to the capacity desired at a given moment.

Further the device can be executed such that the angles +α and -α are adjustable whereby the value α need not to be equal in both cases. The value +α e.g. can be higher than the value -α because in the first case overturned bottles 6′ can be more enclosed by upstanding bottles and so will less easier roll down from the conveyors.

Obviously the possibility exists that the inclinations of the conveyors shown in the Figs. 2 and 4 are reversed, in which case the bottles 6 will quicker leave the supply conveyor 1 and will follow more the guiding rod 8.

All these possibilities, however, will be obvious for the expert and need no further explanation.

## Claims

1.  In-line device for the transformation of containers (6), such as bottles, tins, cans and the like, supplied standing erect beside and behind each other by means of a supply conveyor (1) into a smaller and in particular single line for removal by means of a discharge conveyor (3) moving at a higher speed than the supply conveyor (1) and in such a way that the speeds of the tracks (4,3) of the supply and discharge conveyor (1,3) are about inversely proportional to the widths of the related conveyors, said supply conveyor (1) and discharge conveyor (3) being positioned on either side of a transfer conveyor (2) consisting of a number of transfer tracks (5) which are driven with various speeds such that a stepwise transition is present between the speed of the supply conveyor (1) and of the discharge conveyor (3), guiding rods (7,8) being present on the side of the succeeding conveyors (1,2,3) for guiding the containers (6) from the supply conveyor (1) to the discharge conveyor (3) and the upper surface of the conveyors (1,2,3), viewed transverse to the direction of movement (P) of the conveyors, may make angle (α) with the horizontal plane, characterized in that when the supply conveyor (1) is making a positive angle (+α) with the horizontal plane, this angle is decreasing in the direction towards the discharge conveyor (3) and is changing into a negative angle (-α) near the discharge conveyor (3).

2.  Device according to claim 1, characterized in that the angle (α) which the upper surface of the conveyors (1,2,3) is making with the horizontal plane lies between -5° and +5°.

3.  Device according to claim 1 or 2, characterized in that the angle (+α) which the upper surface of the conveyors (1,2,3) is making with the horizontal plane near the supply conveyor (1) is directed such that when bringing the containers (6) on the transfer conveyor (2) the containers (6) have to be pressed upwardly.

## Patentansprüche

1.  Vorrichtung zum Transformieren von Behältern (6), wie Flaschen, Büchsen, Dosen und dergleichen, aufrecht stehend neben und hinter einander mittels eines Zufuhrförderers (1) zugeführt, in eine schmälere und insbesondere einfache Reihe für Abfuhr mittels eines Abfuhrförderers (3), der sich mit grösserer Geschwindigkeit als der Zufuhrförderer (1) bewegt und zwar derart dass die Geschwindigkeit der Bahnen (4,3) des Zufuhr- und Abfuhrförderers (1,3) nahezu umgekehrt proportional mit der Breite der betreffenden Förderer sind, wobei der Zufuhrförderer (1) und der Abfuhrförförderer (3) sich beiderseits eines Übergangsförderers (2) befinden, der aus einer Anzahl Übergangsbahnen (5) bestehen, die mit verschiedenen Geschwindigkeiten derart angetrieben werden, dass ein schrittweiser Übergang zwischen der Geschwindigkeit des Zufuhrförderers (1) und des Abfuhrförderers (3) vorhanden ist, wobei Führungsstangen (7,8) zum Führen der Behälter (6) von dem Zufuhrförderer (1) zu dem Abfuhrförderer (3) hin auf der Seite der aufeinanderfolgenden Förderer (1,2,3) vorgesehen sind und die obere Fläche der Förderer (1,2,3) quer zur Bewegungsrichtung (P) der Förderer gesehen, einen Winkel (α) mit der horizontalen Ebene bilden kann, **dadurch gekennzeichnet**, dass wenn der Zufuhrförderer (1) mit der horizontalen Ebene einen positiven Winkel (+α) bildet, dieser Winkel in der Richtung zum Abfuhrförderer (3) hin kleiner wird und in der Nähe des Abfuhrförderers (3) in einen negativen Winkel (-α) übergeht.

2. Vorrichtung nach Anspruch 1, **dadurch ge kennzeichnet**, dass der Winkel (α), den die obere Fläche der Förderer (1,2,3) mit der horizontalen Ebene bildet, zwischen -5° und +5° liegt.

3. Vorrichtung nach Anspruch 1 oder 2, **dadurch gekennzeichnet**, dass der Winkel (+α), den die öbere Fläche der Förderer (1,2,3) mit der horizontalen Ebene in der Nähe des Zufuhrförderers (1) bildet, derart gerichtet ist, dass beim Bringen der Behälter (6) auf den Übergangsförderer (2) die Behälter (6) nach oben hin gedrückt werden müssen.

**Revendications**

1. Dispositif pour la transformation de conteneurs (6) tels que des bouteilles, boîtes et similaire, alimentés debout les uns après ou à côté des autres au moyen d'un convoyeur d'alimentation (1), en une ligne plus étroite et en particulier simple pour déchargement au moyen d'un convoyeur de déchargement (3) qui se déplace à plus grande vitesse que le convoyeur d'alimentation (1) et cela de facon que les vitesses des trajectoires (4,3) du convoyeur d'alimentation et de déchargement (1,3) sont à peu près inversement proportionnelles aux largeurs des convoyeurs respectifs, le convoyeur d'alimentation (1) et le convoyeur de déchargement (3) se trouvant des deux côtés d'un convoyeur de transfert (2) se composant d'un nombre de trajectoires de transfert (5) qui sont entraînées à des vitesses différentes de facon qu'un transfert pas à pas est prévu entre les vitesses du convoyeur d'alimentation (1) et du convoyeur de déchargement (3), des barres de guidage (7,8) étant prévues au côté des convoyeurs (1,2,3) successifs pour guider les conteneurs (6) à partir du convoyeur d'alimentation (1) vers le convoyeur de déchargement (3) et la face supérieure des convoyeurs (1,2,3), vu transversalement à la direction de déplacement (P) des convoyeurs, pouvant former un angle (α) avec le plan horizontal, **caractérisé en ce** que si le convoyeur d'alimentation (1) forme un angle positif (+α) avec le plan horizontal, cet angle devient plus petit dans la direction du convoyeur de déchargement (3) et change en un angle négatif (-α) à proximité du convoyeur de déchargement.

2. Dispositif selon la revendication 1, **caractérisé en ce** que l'angle (α) que la face supérieure des convoyeurs (1,2,3) forme avec le plan horizontal, se trouve entre -5° et +5°.

3. Dispositif selon la revendication 1 ou 2, **caractérisé en ce** que l'angle (+α) que la face supérieure des convoyeurs (1,2,3) forme avec le plan horizontal à proximité du convoyeur d'alimentation (1), est dirigé de facon qu'en mettant les conteneurs (6) sur le convoyeur de transfert (2) les conteneurs (6) doivent être poussés vers le haut.

FIG. 1

FIG. 2

FIG. 3

FIG. 4

EP 0 329 210 B1